# EUROPÄISCHE PATENTANMELDUNG

(11) **EP 3 594 810 A1**
(43) Veröffentlichungstag der Anmeldung: **15.01.2020**
(21) Anmeldenummer: 19184192.3
(22) Anmeldetag: 03.07.2019
(51) Int. Cl.: G06F 9/48, G06F 9/50

(54) **COMPUTERSYSTEM-INFRASTRUKTUR SOWIE VERFAHREN ZUM HOSTEN EINER ANWENDUNGSSOFTWARE**

(30) Priorität: 09.07.2018 DE 102018116554
(71) Anmelder: Fujitsu Technology Solutions Intellectual Property GmbH, 80807 München (DE)
(72) Erfinder: Bruderek, Timo, 80807 München (DE); Atzkern, Jürgen, 80807 München (DE)
(74) Vertreter: Epping - Hermann - Fischer

(57) **Zusammenfassung**

Die Erfindung betrifft eine Computersystem-Infrastruktur (1) sowie ein Verfahren zum Hosten einer Anwendungssoftware in einer solchen Computersystem-Infrastruktur (1). Diese weist ein Edge-Computersystem (2) und ein Cloud-Computersystem (3) auf, wobei das Edge-Computersystem (2) an das Cloud-Computersystem (3) anbindbar ist. Im Edge-Computersystem (2) und im Cloud-Computersystem (3) sind virtuelle Umgebungen (4, 5) zum Hosten einer Anwendungssoftware (6) eingerichtet, wobei die virtuelle Umgebung (4) des Edge-Computersystems (2) und die virtuelle Umgebung (5) des Cloud-Computersystems (3) jeweils als für die Anwendungssoftware (6) einheitliche Host-Umgebungen eingerichtet sind. Die Anwendungssoftware (6) kann zwischen den beiden virtuellen Umgebungen (4, 5) des Edge-Computersystems (2) und des Cloud-Computersystems (3) einfach und flexibel transferiert werden.

## Beschreibung

Die Erfindung betrifft eine Computersystem-Infrastruktur, aufweisend wenigstens ein Edge-Computersystem und wenigstens ein Cloud-Computersystem, wobei das Edge-Computersystem an das Cloud-Computersystem anbindbar ist. Ferner betrifft die Erfindung ein Verfahren zum Hosten einer Anwendungssoftware in einer solchen Computersystem-Infrastruktur.

In Computersystem-Infrastrukturen mit mehreren Computersystemen ist es mehr und mehr von Bedeutung, Anwendungssoftware, die bestimmte Dienste oder Anwendungen zur Verfügung stellt, ressourcenabhängig zwischen den Computersystemen zu transferieren. Insbesondere in Computersystem-Infrastrukturen mit einem sogenannten Edge-Computersystem auf der einen Seite und einem Cloud-Computersystem (zum Beispiel innerhalb eines Rechenzentrums) auf der anderen Seite ist ein Transfer von Anwendungssoftware von der Cloud an die Edge (oder umgekehrt) oftmals wünschenswert, um eine gute Performanz und Verwendbarkeit der Dienste beziehungsweise Anwendungen zu erreichen und/oder Echtzeit-Anforderungen zu erfüllen. Oftmals besteht ein Problem in derartigen Computersystem-Infrastrukturen darin, dass die Hardware beziehungsweise Hardwareumgebung auf Seiten des Edge-Computersystems nicht mit der Hardware beziehungsweise Hardwareumgebung auf Seiten des Cloud-Computersystems vergleichbar und gegebenenfalls völlig unterschiedlich ist. Ferner bringen derartige Computersystem-Infrastrukturen Problematiken einer Latenz und einer niedrigen Bandbreite einer Datenverbindung mit sich, die zudem gegebenenfalls nur temporär möglich ist, um ein Edge-Computersystem an ein Cloud-Computersystem temporär anzubinden. Insofern ist ein flexibler Transfer von bestimmten Diensten oder Anwendungen zwischen derartigen Computersystemen keine leichte Aufgabe.

Oftmals werden Anwendungsprogramme beziehungsweise Anwendungssoftware, die zwischen Computersystemen in einer Computersystem-Infrastruktur transferiert werden sollen, in definierte Software-Container gekapselt. Hierbei kann die Anwendungssoftware auf einfache Weise in ihrer Funktionalität und mit ihren Komponenten zusammengestellt werden und als eine oder mehrere Container-Dateien zwischen den Computersystemen transferiert werden. Allerdings erfordern derartige Container-Lösungen in sämtlichen beteiligten Computersystemen gleiche Betriebsumgebungen, in denen die entsprechenden Container betrieben werden können. Ferner ist bei derartigen Lösungen eine Management-Instanz notwendig, die überprüft, in welcher Betriebsumgebung und auf welchem Computersystem ein Anwendungsprogramm zu einem bestimmten Zeitpunkt läuft, um zu gewährleisten, dass das Anwendungsprogramm nur in einem Computersystem und nicht in mehreren Computersystemen der Infrastruktur gleichzeitig läuft, was Ressourcen verschwenden würde.

Zum Transfer von Container-Dateien innerhalb von Clustern mit mehreren Computersystemen gibt es bereits gängige Orchestrierungslösungen, wie zum Beispiel das Framework "Kubernetes". Derartige Frameworks sind jedoch ausschließlich für die Anwendung innerhalb von Cloud-Umgebungen, das heißt zum Beispiel innerhalb von Rechenzentren vorgesehen und praktikabel. Solche Lösungen sind jedoch für Computersystem-Infrastrukturen der oben erläuterten Art mit einem Zusammenspiel zwischen unterschiedlichen Edge-Computersystemen und Cloud-Computersystemen nicht praktikabel.

Es ist daher eine Aufgabe der vorliegenden Erfindung, eine Computersystem-Infrastruktur sowie ein Verfahren zum Hosten einer Anwendungssoftware zu implementieren, die ein dynamisches, flexibles und einfaches Hosten einer Anwendungssoftware innerhalb einer solchen Computersystem-Infrastruktur ermöglichen.

Diese Aufgabe wird gemäß einem ersten Aspekt durch eine Computersystem-Infrastruktur gemäß Patentanspruch 1 gelöst. Vorteilhafte Ausführungsformen und Weiterbildungen sind in den zugehörigen Unteransprüchen offenbart.

Die Computersystem-Infrastruktur weist wenigstens ein Edge-Computersystem und wenigstens ein Cloud-Computersystem auf. Das Edge-Computersystem ist (zumindest vorübergehend, d.h. temporär) an das Cloud-Computersystem anbindbar. Sowohl im Edge-Computersystem als auch im Cloud-Computersystem ist jeweils eine virtuelle Umgebung zum Hosten einer Anwendungssoftware eingerichtet. Die virtuelle Umgebung des Edge-Computersystems und die virtuelle Umgebung des Cloud-Computersystems sind jeweils als für die Anwendungssoftware einheitliche Host-Umgebungen eingerichtet. Die Anwendungssoftware ist innerhalb einer der virtuellen Umgebungen des Edge-Computersystems und des Cloud-Computersystems bereitgestellt. Das Edge-Computersystem und das Cloud-Computersystem sind eingerichtet, die Anwendungssoftware zwischen den beiden virtuellen Umgebungen des Edge-Computersystems und des Cloud-Computersystems zu transferieren. Ein entsprechender Transfer kann über das Edge-Computersystem und/oder über das Cloud-Computersystem gesteuert werden.

Eine derartige Computersystem-Infrastruktur mit einem Edge-Computersystem und einem Cloud-Computersystem hat gegenüber bisherigen Infrastrukturen dieser Art den Vorteil, dass eine Anwendungssoftware je nach Anwendungsfall und -szenario flexibel und dynamisch zwischen der Netzwerk-Edge und der Cloud transferiert werden kann, obwohl auf Seiten der Netzwerk-Edge als auch auf Seiten der Cloud völlig unterschiedliche Hardwareumgebungen der beteiligten Edge-Computersysteme und der beteiligten Cloud-Computersysteme vorliegen. Die Anwendungssoftware muss dabei nicht über verschiedene Schnittstellen, Programmversionen, Programmkonfigurationen, und so weiter an die verschiedenen Hardwareumgebungen angepasst werden oder in unterschiedlichen Programmversionen für die jeweiligen Hardwareumgebungen eingerichtet sein. Vielmehr kann die Anwendungssoftware einheitlich eingerichtet sein und auf einfache Weise sowohl in der Edge-Umgebung als auch in der Cloud-Umgebung betrieben werden.

Hierzu ist sowohl auf Seiten des Edge-Computersystems als auch auf Seiten des Cloud-Computersystems der erläuterten Computersystem-Infrastruktur jeweils eine virtuelle Umgebung zum Hosten der Anwendungssoftware eingerichtet. Beide virtuellen Umgebungen sind dabei jeweils als einheitliche Host-Umgebungen zum Hosten der Anwendungssoftware eingerichtet. Das bedeutet, dass sowohl die virtuelle Umgebung des Edge-Computersystems als auch die virtuelle Umgebung des Cloud-Computersystems ein einheitliches Ökosystem mit einheitlichen bzw. gleichen Konfigurationen und Schnittstellen für die Anwendungssoftware bereitstellen.

Insbesondere stellen die virtuellen Umgebungen beider Computersysteme für die Anwendungssoftware virtuelle Schnittstellen zur Verfügung, sodass die Anwendungssoftware innerhalb beider virtueller Umgebungen einheitlich betrieben werden kann. Sowohl die virtuelle Umgebung des Edge-Computersystems als auch die virtuelle Umgebung des Cloud-Computersystems können jeweils speziell für die Aufgabe des Hostens der Anwendungssoftware eingerichtet sein.

Aufgrund der einheitlichen Host-Umgebungen, die sowohl im Edge-Computersystem als auch im Cloud-Computersystem über die jeweiligen virtuellen Umgebungen bereitgestellt werden, kann die Anwendungssoftware ohne größere notwendige Veränderungen oder Anpassungen auf das jeweilige Computersystem als geeignete Ressource transferiert werden und dort unmittelbar bereitgestellt werden.

Vermittels der beiden virtuellen Umgebungen wird eine Anbindung der Anwendungssoftware über einen Steuerungsmechanismus der jeweiligen virtuellen Umgebungen an die Hardwareebene der beteiligten Computersysteme vermittelt. Ein derartiger Steuerungsmechanismus kann zum Beispiel über einen entsprechenden Hypervisor oder VM-Monitor erfolgen, der jeweils im Edge-Computersystem und im Cloud-Computersystem eingerichtet ist. Auf diese Weise kann ein Transferieren und variables Hosten einer Anwendungssoftware innerhalb der Computersystem-Infrastruktur mit wenigstens einem Edge-Computersystem und wenigstens einem Cloud-Computersystem auf einfache Weise durchgeführt werden, obwohl mit dem Edge-Computersystem und mit dem Cloud-Computersystem völlig unterschiedliche Hardwareumgebungen vorliegen. Die Computersystem-Infrastruktur der erläuterten Art ermöglicht somit ein einfaches Transferieren von bestimmten Diensten oder Anwendungen je nach Anwendungsfall entweder in die Cloud-Umgebung oder in die Edge-Umgebung.

Der Begriff "Edge-Computersystem" soll in diesem Kontext verstanden werden als System, das an oder in zu überwachenden Maschinen, Anlagen oder Komponenten eingerichtet ist zum Überwachen, Steuern und/oder Sensieren der Maschinen, Anlagen oder Komponenten. Insbesondere kann das Edge-Computersystem speziell für einen Einsatz an exponierten Einsatzorten und/oder Einsatzorten mit extremen Umwelteinflüssen eingerichtet sein. Das Edge-Computersystem kann insbesondere mit einer gewünschten Performanz zum Sammeln von Daten und/oder zum Steuern der zu überwachenden Maschine, Anlage oder Komponente in Echtzeit eingerichtet sein.

Der Begriff "Cloud-Computersystem" soll in diesem Kontext verstanden werden als System für eine Hintergrund-Verarbeitung beziehungsweise -Bereitstellung von Daten, die zwischen der Edge-Umgebung beziehungsweise Endgeräte-Umgebung und der Cloud ausgetauscht werden. Das Cloud-Computersystem kann zum Beispiel als Hochperformanz-System (zum Beispiel als Server) innerhalb eines Rechenzentrums eines Providers eingerichtet sein. Insofern kann das Cloud-Computersystem örtlich und/oder logisch vollständig entkoppelt sein vom Edge-Computersystem. Das Edge-Computersystem kann über eine Datenverbindung (temporär) an das Cloud-Computersystem angebunden werden.

In diversen Ausführungsformen der Computersystem-Infrastruktur ist im Edge-Computersystem eine erste Ressourcen-Steuerkomponente zum Erfassen von Ressourcen-Informationen des Edge-Computersystems eingerichtet. Alternativ oder ergänzend kann im Cloud-Computersystem eine zweite Ressourcen-Steuerkomponente zum Erfassen von Ressourcen-Informationen des Cloud-Computersystems eingerichtet sein. Das Edge-Computersystem und das Cloud-Computersystem können derart eingerichtet sein, dass die Anwendungssoftware in Abhängigkeit von durch die erste und/oder die zweite Ressourcen-Steuerkomponente erfassten Ressourcen-Informationen zwischen dem Edge-Computersystem und dem Cloud-Computersystem transferiert wird.

Vermittels der im Edge-Computersystem und/oder im Cloud-Computersystem eingerichteten (ersten beziehungsweise zweiten) Ressourcen-Steuerkomponente können im Edge-Computersystem und/oder im Cloud-Computersystem Ressourcen-Informationen erfasst werden, die einen Rückschluss auf die Ressourcenverteilung, Performanz, Fehlerzustände oder Betriebszustände des Edge-Computersystems und/oder des Cloud-Computersystems zulassen. Anhand derartiger erfasster Ressourcen-Informationen erlaubt die Computersystem-Infrastruktur somit einen davon abhängigen Transfer der Anwendungssoftware zwischen dem Edge-Computersystem und dem Cloud-Computersystem. Die jeweilige im Edge-Computersystem und/oder im Cloud-Computersystem eingerichtete Ressourcen-Steuerkomponente ermöglicht somit ein dynamisches Erfassen von Ressourcen-Informationen zum Entscheiden eines dynamischen Transfers der Anwendungssoftware auf dasjenige Computersystem, das für einen bestimmten Anwendungsfall die optimale Ressource zum Betrieb der Anwendungssoftware darstellt.

Die Ressourcen-Steuerkomponente des jeweiligen Computersystems ist beispielweise in der jeweiligen virtuellen Umgebung implementiert. Dies hat den Vorteil, dass über die jeweilige Ressourcen-Steuerkomponente unmittelbar die Host-Umgebung für die Anwendungssoftware hinsichtlich ihrer Performanz beziehungsweise Ressourceneigenschaft überwacht werden kann. Alternativ kann die jeweilige Ressourcen-Steuerkomponente auch in einem der jeweiligen virtuellen Umgebung übergeordneten Teil, zum Beispiel in einem Hypervisor oder einem Host-Betriebssystem des jeweiligen Computersystems zum Verwalten der virtuellen Umgebung implementiert sein. Dies hat den Vorteil, dass die Ressourcen-Steuerkomponente die die virtuelle Umgebung verwaltenden beziehungsweise steuernden Komponenten des jeweiligen Computersystems überwachen kann. Hierbei ist auch denkbar, dass die Ressourcen-Steuerkomponente jeweils auch Hardware-Parameter des jeweiligen Computersystems erfasst, um entsprechende Ressourcen-Informationen daraus ableiten zu können. Alternativ ist auch denkbar, im jeweiligen Computersystem sowohl in der virtuellen Umgebung als auch in der virtuellen Umgebung übergeordneten Komponenten entsprechende Ressourcen-Steuerkomponenten zum Erfassen von Ressourcen-Informationen einzurichten. Sämtliche Ressourcen-Steuerkomponenten können Bestandteil eines dynamischen Ressourcen-Kontrollsystems sein.

In diversen Ausführungsformen der Computersystem-Infrastruktur ist im Edge-Computersystem und/oder im Cloud-Computersystem eine Ressourcen-Entscheidungslogik implementiert zum Entscheiden eines Transfers der Anwendungssoftware zwischen dem Edge-Computersystem und dem Cloud-Computersystem in Abhängigkeit von durch die erste und/oder die zweite Ressourcen-Steuerkomponente erfassten Ressourcen-Informationen. Eine derartige Ressourcen-Entscheidungslogik hat den Vorteil, dass anhand der über die Ressourcen-Steuerkomponenten erfassten Ressourcen-Informationen eine dynamische Ressourcenverteilung zwischen dem Edge-Computersystem und dem Cloud-Computersystem vorgenommen werden kann. Je nach Anwendungsfall kann entweder das Edge-Computersystem oder das Cloud-Computersystem als Ressource für die Bereitstellung eines über die Anwendungssoftware vorgegebenen Dienstes ausgewählt werden. Je nachdem, ob die Ressourcen-Entscheidungslogik(en) das Edge-Computersystem oder das Cloud-Computersystem als Ressource für die Anwendungssoftware bestimmt, kann die Anwendungssoftware auf das bestimmte Computersystem transferiert werden, falls die Anwendungssoftware nicht bereits auf diesem Computersystem läuft. Die Computersystem-Infrastruktur benötigt somit neben dem Edge-Computersystem und dem Cloud-Computersystem keine weitere dezidierte Management-Komponente, wie zum Beispiel ein Master-System, um eine intelligente Ressourcenverteilung im Sinne eines Transfers der Anwendungssoftware zwischen dem Edge-Computersystem und dem Cloud-Computersystem durchzuführen. Insofern ist die Computersystem-Infrastruktur auch in dieser Hinsicht einfach implementierbar. Sämtliche Ressourcen-Entscheidungslogiken können Bestandteil eines dynamischen Ressourcen-Kontrollsystems sein.

Auch in diesem Zusammenhang zeigt sich somit ein entscheidender Effekt der Computersystem-Infrastruktur der erläuterten Art, wonach die Anwendungssoftware gesteuert durch die Ressourcen-Entscheidungslogik(en) sowohl im Edge-Computersystem als auch im Cloud-Computersystem in einer einheitlichen Host-Umgebung betrieben werden kann, ohne dass es aus Sicht der Anwendungssoftware eine Rolle spielt, auf welchem Computersystem sie bereitgestellt wird und läuft. Ein Vermitteln zwischen der Anwendungssoftware und den unterschiedlichen Hardwareumgebungen des Edge-Computersystems und des Cloud-Computersystems erfolgt, wie oben erläutert, vermittels der jeweiligen virtuellen Umgebungen.

Eine entsprechende Ressourcen-Entscheidungslogik kann derart implementiert sein, dass sie nicht nur eine Entscheidung für den Transfer der Anwendungssoftware auf das geeignete Computersystem durchführt, sondern auch sicherstellt, dass die Anwendungssoftware jeweils nur einmal auf einem dezidierten Computersystem innerhalb der Computersystem-Infrastruktur abläuft. Auf diese Weise ermöglicht die Ressourcen-Entscheidungslogik nicht nur eine optimale Ressourcenverteilung, sondern auch eine optimale Ressourcenausnutzung. Die entsprechende Ressourcen-Entscheidungslogik kann weiterhin derart implementiert sein, dass die erfassten Ressourcen-Informationen anhand einer vorgegebenen Metrik für eine Entscheidung eines Transfers der Anwendungssoftware zwischen den beteiligten Computersystemen ausgewertet werden. Eine derartige Metrik kann zum Beispiel vorgegebene Regeln einer Ressourcenverteilung zwischen den beteiligten Computersystemen, gegebenenfalls abhängig von vorbestimmten Anwendungsszenarien umfassen. Auf diese Weise ist die Computersystem-Infrastruktur flexibel an verschiedene Anwendungsszenarien anpassbar, wobei die Anwendungssoftware einmal im Edge-Computersystem bereitgestellt wird und einmal im Cloud-Computersystem bereitgestellt wird. Eine Bereitstellung im Edge-Computersystem kann zum Beispiel für eine Datenerfassung unmittelbar in der Edge-Umgebung genutzt werden, während die Bereitstellung im Cloud-Computersystem für eine Datenverarbeitung in der Cloud ausgenutzt wird.

In diversen Ausführungsformen der Computersystem-Infrastruktur sind die erste Ressourcen-Steuerkomponente und die zweite Ressourcen-Steuerkomponente eingerichtet, miteinander zu kommunizieren und erfasste Ressourcen-Informationen auszutauschen. Eine entsprechende Kommunikation kann zum Beispiel über ein Nachrichten-basiertes Maschine-zu-Maschine-Protokoll, zum Beispiel MQTT (Message Queue Telemetry Transport) erfolgen. Auch diesbezüglich können das Edge-Computersystem und das Cloud-Computersystem somit Informationen untereinander austauschen und einen entsprechenden Transfer der Anwendungssoftware auf das optimale Computersystem veranlassen, ohne das es eines übergeordneten Master-Systems bedarf. Im Falle einer Implementierung einer Kommunikation über MQTT bedarf es lediglich eines sogenannten MQTT-Brokers, der die jeweiligen Nachrichten des Edge-Computersystems beziehungsweise des Cloud-Computersystems entgegennimmt und an das jeweils andere System weiterleitet. Es ist denkbar, dass ein derartiger MQTT-Broker innerhalb der Cloud-Umgebung des Cloud-Computersystems eingerichtet ist.

In diversen Ausführungsformen ist die Anwendungssoftware als eine oder mehrere Container-Dateien eingerichtet. Auf diese Weise kann die Anwendungssoftware flexibel für bestimmte Einsatzzwecke aus vorbestimmten Komponenten zusammengestellt und aufgebaut werden und ist im Sinne einer "portablen" Anwendungssoftware auf einfache Weise zwischen den beteiligten Computersystemen transportierbar. Auch eine Verwaltung der Anwendungssoftware im Sinne von Veränderungen, Re-Konfigurationen oder Updates ist auf diese Weise einfach durchführbar. Dies kann zum Beispiel über einen Paket-Verteilungsdienst erfolgen.

Die obige Aufgabe wird gemäß einem zweiten Aspekt durch ein Verfahren zum Hosten einer Anwendungssoftware gemäß Patentanspruch 6 gelöst. Weitergehende Implementierungen sind in den zugehörigen Unteransprüchen offenbart.

Das Verfahren dient zum Hosten einer Anwendungssoftware in einer Computersystem-Infrastruktur, aufweisend wenigstens ein Edge-Computersystem und wenigstens ein Cloud-Computersystem, wobei das Edge-Computersystem zumindest zeitweise an das Cloud-Computersystem angebunden wird. Sowohl das Edge-Computersystem als auch das Cloud-Computersystem stellen bei diesem Verfahren jeweils eine virtuelle Umgebung zum Hosten einer Anwendungssoftware bereit. Die virtuelle Umgebung des Edge-Computersystems und die virtuelle Umgebung des Cloud-Computersystems sind jeweils als für die Anwendungssoftware einheitliche Host-Umgebungen eingerichtet. Die Anwendungssoftware wird bei dem Verfahren innerhalb einer der virtuellen Umgebungen des Edge-Computersystems und des Cloud-Computersystems bereitgestellt und bei Eintreten eines vorgegebenen Ressourcenereignisses in die (jeweils) andere der virtuellen Umgebungen des Edge-Computersystems und des Cloud-Computersystems transferiert.

Ein derartiges Verfahren hat gegenüber herkömmlichen Maßnahmen den Vorteil, dass eine Anwendungssoftware innerhalb einer Computersystem-Infrastruktur mit völlig unterschiedlichen Hardwareumgebungen beteiligter Computersysteme flexibel und einfach im Sinne einer Ressourcenverteilung in Abhängigkeit eines bestimmten Anwendungsszenarios transferiert werden kann. Hinsichtlich der Implementierung der Anwendungssoftware und eines Hostens der Anwendungssoftware in einer jeweiligen für die Anwendungssoftware einheitlichen Host-Umgebung sowohl im Edge-Computersystem als auch im Cloud-Computersystem ergeben sich die bereits oben im Zusammenhang mit einer Computersystem-Infrastruktur gemäß dem ersten Aspekt erläuterten Vorteile. Insbesondere kann die Anwendungssoftware vermittels der jeweiligen virtuellen Umgebungen innerhalb des Edge-Computersystems und innerhalb des Cloud-Computersystems trotz völlig unterschiedlicher Hardwareumgebungen einheitlich, flexibel und einfach bereitgestellt werden. Durch Überwachen des Eintretens eines vorgegebenen Ressourcenereignisses kann die Anwendungssoftware zwischen den beteiligten Computersystemen transferiert werden, sodass dasjenige Computersystem, auf dem die Anwendungssoftware läuft, als für einen bestimmten Anwendungsfall optimale Ressource die Anwendungssoftware bereitstellt. Auf diese Weise können bestimmte durch die Anwendungssoftware bereitgestellte Dienste beziehungsweise Anwendungen optimal entweder in der Edge-Umgebung nahe einer zu überwachenden Maschine, Anlage oder Komponente oder alternativ in einer Cloud-Umgebung (als örtlich entfernte Hintergrund-Umgebung) eingesetzt werden.

Der Begriff "Ressourcenereignis" soll in diesem Kontext verstanden werden als ein bestimmtes Ereignis, das eine Umverteilung von Ressourcen, insbesondere einen Transfer der Anwendungssoftware, innerhalb der Computersystem-Infrastruktur auslöst und/oder erforderlich macht. Dies kann zum Beispiel das Verändern einer Lastverteilung, Performanz, eines Betriebsverhaltens, Fehlerverhaltens, und so weiter zwischen dem Edge-Computersystem und dem Cloud-Computersystem umfassen. Anhand eines solchen Ressourcenereignisses erlaubt das Verfahren somit ein dynamisches Entscheiden eines Transfers der Anwendungssoftware auf dasjenige Computersystem innerhalb der Computersystem-Infrastruktur, das für einen bestimmten Anwendungsfall die optimale Ressource darstellt.

In diversen Implementierungen des Verfahrens werden im Edge-Computersystem Ressourcen-Informationen des Edge-Computersystems erfasst. Alternativ oder ergänzend werden im Cloud-Computersystem Ressourcen-Informationen des Cloud-Computersystems erfasst. Die erfassten Ressourcen-Informationen können hinsichtlich des Eintretens des vorgegebenen Ressourcenereignisses ausgewertet werden. Auf diese Weise erlaubt das Verfahren die Überwachung des Eintretens des vorgegebenen Ressourcenereignisses anhand der im Edge-Computersystem und/oder im Cloud-Computersystem erfassten Ressourcen-Informationen, ohne das es eines übergeordneten Master-Systems bedarf. Die Ressourcen-Informationen können im jeweiligen Computersystem zum Beispiel über eine Ressourcen-Steuerkomponente erfasst werden. Ein Auswerten der erfassten Ressourcen-Informationen kann über solche Ressourcen-Steuerkomponenten oder alternativ über eine oder mehrere Ressourcen-Entscheidungslogiken erfolgen. An dieser Stelle sei auf die obigen Erläuterungen zur Ressourcen-Steuerkomponenten beziehungsweise Ressourcen-Entscheidungslogiken im Zusammenhang mit einer Computersystem-Infrastruktur gemäß dem ersten Aspekt verwiesen.

In diversen Implementierungen des Verfahrens tauschen das Edge-Computersystem und das Cloud-Computersystem erfasste Ressourcen-Informationen über ein Nachrichten-basiertes Maschine-zu-Maschine-Protokoll aus. Ein derartiges Protokoll kann zum Beispiel MQTT sein. Diesbezüglich wird auf die obigen Erläuterungen im Zusammenhang mit einer Computersystem-Infrastruktur gemäß dem ersten Aspekt verwiesen.

In diversen Implementierungen des Verfahrens wird die Anwendungssoftware als eine oder mehrere Container-Dateien bereitgestellt. In diesem Zusammenhang wird ebenfalls auf die obigen Erläuterungen im Zusammenhang mit einer Computersystem-Infrastruktur gemäß dem ersten Aspekt verwiesen.

Die dargestellten Ausführungsformen, Implementierungen und vorteilhaften Aspekte einer Computersystem-Infrastruktur der oben erläuterten Art können ihren Niederschlag in entsprechenden Implementierungen, Maßnahmen und vorteilhaften Aspekten eines Verfahrens der oben erläuterten Art finden und umgekehrt.

Die Erfindung wird nachfolgend anhand eines Ausführungsbeispiels unter Zuhilfenahme einer Zeichnung näher erläutert.

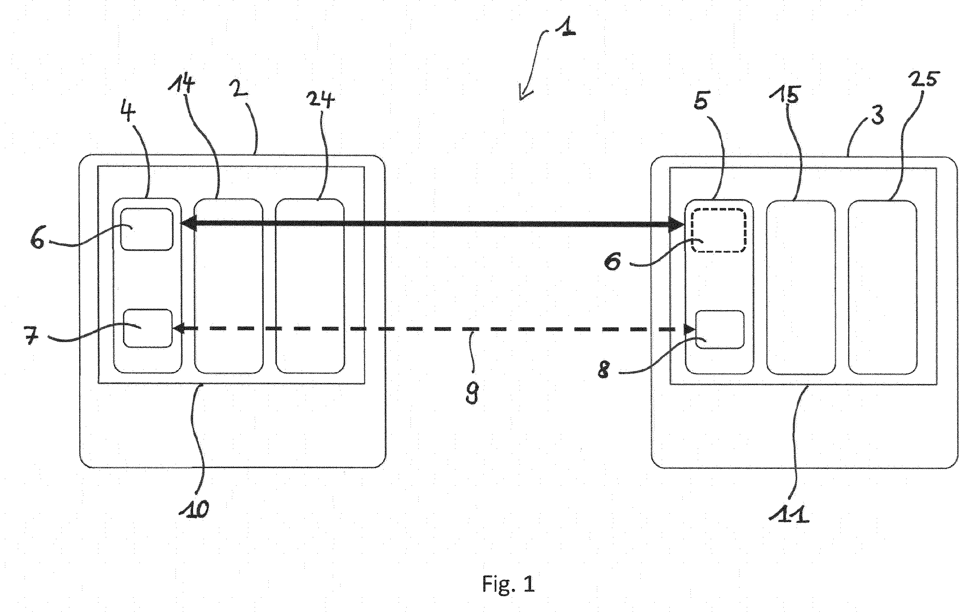

Die einzige Figur 1 zeigt eine Ausführungsform einer Computersystem-Infrastruktur 1 mit einem Edge-Computersystem 2 und einem Cloud-Computersystem 3, die über eine Datenverbindung zumindest temporär verbunden werden können, sodass das Edge-Computersystem 2 an das Cloud-Computersystem 3 angebunden werden kann. Das Edge-Computersystem 2 ist zum Beispiel an oder in einer Maschine, Anlage oder zu überwachenden Komponente eingerichtet, während das Cloud-Computersystem 3 an einem entfernten Ort, zum Beispiel innerhalb eines Rechenzentrums, eingerichtet ist. Zwischen dem Edge-Computersystem 2 und dem Cloud-Computersystem 3 können Daten über die zumindest temporäre Datenverbindung ausgetauscht werden.

Das Edge-Computersystem 2 ist gemäß Figur 1 mit mehreren virtuellen Umgebungen 4, 14 und 24 eingerichtet, die jeweils als virtuelle Maschinen bestimmte virtualisierte Funktionalitäten zur Verfügung stellen. Die virtuellen Umgebungen 4, 14 und 24 werden im Ausführungsbeispiel gemäß Figur 1 über einen Hypervisor oder VM-Monitor 10 gesteuert, der eine Vermittlung zwischen den virtuellen Umgebungen 4, 14 und 24 und einem Host-Betriebssystem beziehungsweise einer Hardware des Edge-Computersystem 2 vornimmt.

Innerhalb der virtuellen Umgebung 4 ist eine Anwendungssoftware 6 installiert, die während des Betriebes des Edge-Computersystems 2 abläuft und einen bestimmten Dienst beziehungsweise eine bestimmte Anwendung oder Funktionalität bereitstellt. Vermittels der Anwendungssoftware 6 führt das Edge-Computersystem 2 somit in der Edge-Umgebung eine bestimmte Funktion aus. Diese kann zum Beispiel im Sammeln und Auswerten von Sensordaten einer über das Edge-Computersystem 2 zu überwachenden Maschine, Anlage oder sonstigen Komponente bestehen. Die Anwendungssoftware 6 ist zum Beispiel in Form einer oder mehrerer Container-Dateien implementiert, wobei vorbestimmte Applikationskomponenten, Bibliotheken, Funktionen, Betriebssystemkomponenten und so weiter in der einen oder mehreren Container-Dateien eingebettet sind. Die Anwendungssoftware 6 wird auf diese Weise innerhalb der virtuellen Umgebung 4 betrieben, die als Host-Umgebung die Anwendungssoftware 6 beherbergt, verwaltet und bereitstellt.

Zusätzlich ist in der virtuellen Umgebung 4 eine Ressourcen-Steuerkomponente 7 implementiert, die Ressourcen-Informationen des Edge-Computersystems 2 erfasst. Die Ressourcen-Steuerkomponente 7 kann derart implementiert sein, dass sie lediglich Performance- oder Betriebs-Daten innerhalb der virtuellen Umgebung 4 erfasst. Alternativ oder ergänzend kann die Ressourcen-Steuerkomponente 7 auch implementiert sein, Performance- und Betriebs-Daten der weiteren Komponenten 14, 24 und 10 sowie weiterer Software- oder Hardware-Komponenten des Edge-Computersystems 2 zu erfassen. Die Ressourcen-Steuerkomponente 7 kann ferner derart implementiert sein, dass sie lediglich eine Schnittstelle einer übergeordneten Ressourcen-Komponente (nicht dargestellt) darstellt, wobei die übergeordnete Ressourcen-Komponente vermittels der Ressourcen-Steuerkomponente 7 Informationen innerhalb der virtuellen Umgebung 4 erfasst. Eine Funktionalität der Ressourcen-Steuerkomponente 7 wird weiter unten näher erläutert.

Das Cloud-Computersystem 3 weist in der Ausführungsform gemäß Figur 1 ebenfalls drei virtuelle Umgebungen 5, 15 und 25 auf, die innerhalb des Cloud-Computersystems 3 virtuelle Funktionalitäten bereitstellen. Die virtuellen Umgebungen 5, 15 und 25 werden über einen Hypervisor beziehungsweise VM-Monitor 11 überwacht und gesteuert. Hier gelten die oben im Zusammenhang mit den virtuellen Umgebungen 4, 14 und 24 sowie dem Hypervisor 10 dargestellten Erläuterungen analog.

Innerhalb der virtuellen Umgebung 5 ist gemäß Figur 1 eine weitere Ressourcen-Steuerkomponente 8 eingerichtet. Deren Funktionalität kann analog zur Ressourcen-Steuerkomponente 7 innerhalb der virtuellen Umgebung 4 des Edge-Computersystems 2 implementiert sein, sodass an dieser Stelle die obigen Erläuterungen zur Ressourcen-Steuerkomponente 7 analog gelten.

Die Ressourcen-Steuerkomponente 7 innerhalb des Edge-Computersystems 2 und die Ressourcen-Steuerkomponente 8 innerhalb des Cloud-Computersystems 3 können über eine Kommunikationsverbindung 9 zumindest temporär miteinander kommunizieren und über die jeweiligen Ressourcen-Steuerkomponenten 7 und 8 erfasste Ressourcen-Informationen untereinander austauschen. Die Kommunikationsverbindung 9 kann zum Beispiel als MQTT-Verbindung (gegebenenfalls unter Zuhilfenahme eines zwischen dem Edge-Computersystem 2 und dem Cloud-Computersystem 3 vermittelnden MQTT-Broker, nicht dargestellt) eingerichtet sein. Eine MQTT-Verbindung oder allgemein ein Nachrichten-basiertes Maschinen-zu-Maschine-Protokoll, bietet gegenüber sonstigen Kommunikationsprotokollen den Vorteil, dass das Edge-Computersystem 2 und das Cloud-Computersystem 3 keine offenen Netzwerk-Ports für die Kommunikationsverbindung benötigen, die mit entsprechenden Diensten den Netzwerk-Verkehr abhören (sogenannte Listening Ports), um externe Verbindungsversuche entgegenzunehmen. Für einen Nachrichtenaustausch rufen das Edge-Computersystem 2 und das Cloud-Computersystem 3 vielmehr über Maßnahmen eines Port Knockings oder Pollings entsprechende für sie hinterlegte Nachrichten innerhalb des MQTT-Brokers ab. Auf diese Weise können sowohl das Edge-Computersystem 2 als auch das Cloud-Computersystem 3 diesbezüglich manipulationssicher ausgeführt werden. Zudem benötigt eine derartige Nachrichten-basierte Kommunikation zwischen den beiden Computersystemen 2 und 3 auch keinerlei "Keep Alive"-Anbindung an ein übergeordnetes Master-System. Ein derartiges Master-System kann in der Topologie gemäß Figur 1 vielmehr entfallen und ist aufgrund etwaiger eingeschränkter Bandbreite oder etwaigem temporärem Ausfall einer Datenverbindung zwischen dem Edge-Computersystem 2 und dem Cloud-Computersystem 3 auch nicht praktikabel. Eine nachfolgend erläuterte Ressourcenverteilung erfolgt ausschließlich durch Informationsaustausch zwischen den Computersystemen 2 und 3 anhand von über die Ressourcen-Steuerkomponenten 7 und 8 erfassten Ressourcen-Informationen.

Durch Erfassen von Ressourcen-Informationen über die Ressourcen-Steuerkomponente 7 innerhalb der virtuellen Umgebung 4 des Edge-Computersystems 2 kann zum Beispiel das Vorliegen eines vorgegebenen Ressourcenereignisses festgestellt werden. Eine derartige Feststellung kann entweder über eine Ressourcen-Entscheidungslogik (nicht dargestellt) innerhalb des Edge-Computersystems 2 erfolgen oder über eine entsprechende im Cloud-Computersystem 3 implementierte Ressourcen-Entscheidungslogik (ebenfalls nicht dargestellt). Im letzten Fall werden die über die Ressourcen-Steuerkomponente 7 erfassten Ressourcen-Informationen z.B. vermittels der Kommunikationsverbindung 9 vom Edge-Computersystem 2 an das Cloud-Computersystem 3 übertragen und dort ausgewertet. Das Vorliegen eines vorgegebenen Ressourcenereignisses kann zum Beispiel eine veränderte Betriebssituation oder eine veränderte Performance des Edge-Computersystems 2 oder eine veränderte Auslastung der Computersystems 2 und 3 innerhalb der Computersystem-Infrastruktur 1 umfassen.

Anhand des eingetretenen und über die Ressourcen-Informationen der Ressourcen-Steuereinheit 7 festgestellten Ressourcenereignisses kann entweder über die Ressourcen-Steuerkomponenten 7 und 8 oder über entsprechende Ressourcen-Entscheidungslogiken der erläuterten Art ein Transfer der Anwendungssoftware 6 vom Edge-Computersystem 2 in das Cloud-Computersystem 3 entschieden werden. Eine derartige Entscheidung kann zum Beispiel erfolgen, wenn ein über die Anwendungssoftware 6 bereitgestellter Dienst oder eine entsprechende Anwendung anstelle einer Funktionalität innerhalb des Edge-Computersystems 2 als Funktionalität innerhalb des Cloud-Computersystem 3 bereitgestellt werden soll. Wird ein entsprechender Transfer der Anwendungssoftware 6 entschieden, so kann die Anwendungssoftware 6 vom Edge-Computersystem 2, genauer aus der virtuellen Umgebung 4, in das Cloud-Computersystem 3, genauer in die virtuelle Umgebung 5, übertragen werden (siehe Pfeil zwischen den virtuellen Umgebungen 4 und 5). Die Anwendungssoftware 6 wird somit über ihre eine oder mehreren Container-Dateien aus der virtuellen Umgebung 4 des Edge-Computersystems 2 in die virtuelle Umgebung 5 des Cloud-Computersystems 3 transferiert. Ein entsprechender Transfer kann durch eine oder mehrere der Ressourcen-Steuerkomponenten 7, 8 oder durch eine oder mehrere Ressourcen-Entscheidungslogiken erfolgen, die Bestandteile eines dynamischen Ressourcen-Kontrollsystems sein können. Hierfür kann auch eine vorgegebene Metrik herangezogen werden.

In der virtuellen Umgebung 5 kann die Anwendungssoftware 6 schließlich nach ihrem Transfer unmittelbar bereitgestellt werden (siehe gestrichelte Markierung der Anwendungssoftware 6 innerhalb der virtuellen Umgebung 5). Auf diese Weise kann ein durch die Anwendungssoftware 6 bereitgestellter Dienst vom Edge-Computersystem 2 in das Cloud-Computersystem 3 gemäß Figur 1 verlagert werden (oder umgekehrt). Zum Bespiel kann anhand von erfassten Ressourcen-Informationen, die vermittels der Ressourcen-Steuerkomponenten 7 und/oder 8 gesammelt werden, entschieden werden, dass eine Datenerfassung oder - auswertung vermittels der Anwendungssoftware 6 anstelle einer Durchführung innerhalb des Edge-Computersystems 2 innerhalb des Cloud-Computersystems 3 durchgeführt wird (oder umgekehrt).

Die virtuellen Umgebungen 4 und 5 in den jeweiligen Computersystemen 2 und 3 stellen aus Sicht der Anwendungssoftware 6 jeweils einheitliche Host-Umgebungen zum Betrieb der Anwendungssoftware 6 beriet. Das bedeutet, dass die Anwendungssoftware 6 in den virtuellen Umgebungen 4 und 5 der jeweiligen Computersysteme 2 und 3 immer ein einheitliches Ökosystem beziehungsweise eine einheitliche Betriebsumgebung, zum Beispiel mit gleichen Konfigurationen beziehungsweise Schnittstellen zu weiteren Komponenten der jeweiligen Computersysteme 2 und 3 vorfindet. Auf diese Weise spielt es aus Sicht der Anwendungssoftware 6 keine Rolle, in welcher Umgebung 4 oder 5 der betreffenden Computersysteme 2 und 3 diese läuft, selbst wenn die Computersysteme 2 und 3 völlig unterschiedliche Konfigurationen, zum Beispiel Hardwareumgebungen, aufweisen. Zum Beispiel stellen die virtuellen Umgebungen 4 und 5 jeweils einheitliche virtuelle Interfaces zum Anbinden der Anwendungssoftware 6 bereit. Die virtuellen Umgebungen 4 und 5 können dabei einheitliche Funktionalitäten für die Anwendungssoftware 6 bereitstellen oder sich in ihrem jeweiligen Funktionsumfang auch unterscheiden. Entscheidend ist hierbei, dass die Anwendungssoftware 6 ohne weitergehende Anpassung oder Versionsänderung unmittelbar innerhalb der virtuellen Umgebungen 4 und 5 der beteiligten Computersysteme 2 und 3 bereitgestellt und betrieben werden kann.

Eine entsprechende Vermittlung zwischen der Anwendungssoftware 6 und weiterer Software beziehungsweise Hardware innehrlab der Computersysteme 2 und 3 erfolgt gesteuert über die virtuellen Umgebungen 4 und 5 beziehungsweise über die Hypervisor 10 und 11. Auf diese Weise kann die Anwendungssoftware 6 zum Beispiel über ein virtuelles Interface der jeweiligen virtuellen Umgebung 4 und 5 Zugriff auf unterschiedliche Hardware-Interfaces (z.B. Netzwerkkarten) des jeweiligen Computersystems 2 und 3 erhalten, wobei die Anwendungssoftware 6 lediglich an das einheitlich konfigurierte virtuelle Interface innerhalb der virtuellen Umgebung 4 beziehungsweise 5 angebunden wird und diesbezüglich an keine Änderung oder Unterschiede zwischen den jeweiligen Computersystemen 2 und 3 angepasst werden muss.

Somit kann die Anwendungssoftware 6 auf einfache Weise von der virtuellen Umgebung 4 des Edge-Computersystems 2 in die virtuelle Umgebung 5 des Cloud-Computersystems 3 transferiert werden. Die Anwendungssoftware 6 stellt diesbezüglich eine portable Anwendungssoftware dar.

Die hier erläuterte Computersystem-Infrastruktur und das hier erläuterte Verfahren zum Hosten einer Anwendungssoftware in einer Computersystem-Infrastruktur ermöglichen den einfachen Transfer einer Anwendungssoftware innerhalb der Computersystem-Infrastruktur zwischen Computersystemen, die völlig unterschiedlich gestaltet und funktionell implementiert sein können. Durch Einrichten der entsprechenden virtuellen Umgebungen innerhalb der beteiligten Computersysteme kann die Anwendungssoftware als Container-Datei(en) innerhalb der virtuellen Umgebungen der jeweiligen Computersysteme eingebettet und darin betrieben werden, wobei die virtuellen Umgebungen jeweils (ggf. gesteuert durch Hypervisor) eine Vermittlung zu übergeordneten Software- oder Hardware-Komponenten der beteiligten Computersysteme durchführen. Auf diese Weise kann die Anwendungssoftware bedarfsgerecht zwischen den unterschiedlichen Computersystemen umgezogen werden. So kann ein Dienst zwischen der Edge und der Cloud flexibel hin und her portiert werden. Ein Transfer der Anwendungssoftware zwischen den beteiligten Computersystemen erfolgt vorteilhaft anhand von erfassten Ressourcen-Informationen, die hinsichtlich eines bestimmten Ressourcenereignisses ausgewertet werden, das den Transfer situationsabhängig auslöst. Die Steuerung eines derartigen Transfers kann über Ressourcen-Steuerkomponenten, gegebenenfalls unter Zuhilfenahme übergeordneten Ressourcen-Entscheidungslogiken, anhand vorgegebener Metriken erfolgen. Spezielle Management-Systeme zum übergeordneten Steuern eines Transfers zwischen den ausführenden Computersystemen innerhalb der Computersystem-Infrastruktur sind nicht erforderlich.

Die dargestellte Ausführungsform ist leidglich beispielhaft gewählt.

### Bezugszeichenliste

- 1: Computersystem-Infrastruktur
- 2: Edge-Computersystem
- 3: Cloud-Computersystem
- 4: virtuelle Umgebung
- 5: virtuelle Umgebung
- 6: Anwendungssoftware
- 7: Ressourcen-Steuerkomponente
- 8: Ressourcen-Steuerkomponente
- 9: Kommunikationsverbindung
- 10: Hypervisor
- 11: Hypervisor
- 14: virtuelle Umgebung
- 15: virtuelle Umgebung
- 24: virtuelle Umgebung
- 25: virtuelle Umgebung

## Patentansprüche

1. Computersystem-Infrastruktur (1), aufweisend wenigstens ein Edge-Computersystem (2) und wenigstens ein Cloud-Computersystem (3), wobei das Edge-Computersystem (2) an das Cloud-Computersystem (3) anbindbar ist,
wobei sowohl im Edge-Computersystem (2) als auch im Cloud-Computersystem (3) jeweils eine virtuelle Umgebung (4, 5) zum Hosten einer Anwendungssoftware (6) eingerichtet ist,
wobei die virtuelle Umgebung (4) des Edge-Computersystems (2) und die virtuelle Umgebung (5) des Cloud-Computersystems (3) jeweils als für die Anwendungssoftware (6) einheitliche Host-Umgebungen eingerichtet sind,
wobei die Anwendungssoftware (6) innerhalb einer der virtuellen Umgebungen (4, 5) des Edge-Computersystems (2) und des Cloud-Computersystems (3) bereitgestellt ist und
wobei das Edge-Computersystem (2) und das Cloud-Computersystem (3) eingerichtet sind, die Anwendungssoftware (6) zwischen den beiden virtuellen Umgebungen (4, 5) des Edge-Computersystems (2) und des Cloud-Computersystems (3) zu transferieren.

2. Computersystem-Infrastruktur (1) nach Anspruch 1, wobei im Edge-Computersystem (2) eine erste Ressourcen-Steuerkomponente (7) zum Erfassen von Ressourcen-Informationen des Edge-Computersystems (2) eingerichtet ist und im Cloud-Computersystem (3) eine zweite Ressourcen-Steuerkomponente (8) zum Erfassen von Ressourcen-Informationen des Cloud-Computersystems (3) eingerichtet ist, und
wobei das Edge-Computersystem (2) und das Cloud-Computersystem (3) eingerichtet sind, die Anwendungssoftware (6) in Abhängigkeit von durch die erste und/oder die zweite Ressourcen-Steuerkomponente (7, 8) erfassten Ressourcen-Informationen zwischen dem Edge-Computersystem (2) und dem Cloud-Computersystem (3) zu transferieren.

3. Computersystem-Infrastruktur (1) nach Anspruch 2, wobei im Edge-Computersystem (2) und/oder im Cloud-Computersystem (3) eine Ressourcen-Entscheidungslogik implementiert ist zum Entscheiden eines Transfers der Anwendungssoftware (6) zwischen dem Edge-Computersystem (2) und dem Cloud-Computersystem (3) in Abhängigkeit von durch die erste und/oder die zweite Ressourcen-Steuerkomponente (7, 8) erfassten Ressourcen-Informationen.

4. Computersystem-Infrastruktur (1) nach Anspruch 2 oder 3, wobei die erste Ressourcen-Steuerkomponente (7) und die zweite Ressourcen-Steuerkomponente (8) eingerichtet sind miteinander zu kommunizieren und erfasste Ressourcen-Informationen auszutauschen.

5. Computersystem-Infrastruktur (1) nach einem der Ansprüche 1 bis 4, wobei die Anwendungssoftware (6) als eine oder mehrere Container-Dateien eingerichtet ist.

6. Verfahren zum Hosten einer Anwendungssoftware (6) in einer Computersystem-Infrastruktur (1), aufweisend wenigstens ein Edge-Computersystem (2) und wenigstens ein Cloud-Computersystem (3), wobei das Edge-Computersystem (2) zumindest zeitweise an das Cloud-Computersystem (3) angebunden wird,
wobei sowohl das Edge-Computersystem (2) als auch das Cloud-Computersystem (3) jeweils eine virtuelle Umgebung (4, 5) zum Hosten einer Anwendungssoftware (6) bereitstellen, wobei die virtuelle Umgebung (4) des Edge-Computersystems (2) und die virtuelle Umgebung (5) des Cloud-Computersystems (3) jeweils als für die Anwendungssoftware (6) einheitliche Host-Umgebungen eingerichtet sind, und
wobei die Anwendungssoftware (6) innerhalb einer der virtuellen Umgebungen (4, 5) des Edge-Computersystems (2) und des Cloud-Computersystems (3) bereitgestellt wird und bei Eintreten eines vorgegebenen Ressourcenereignisses in die andere der virtuellen Umgebungen (4, 5) des Edge-Computersystems (2) und des Cloud-Computersystems (3) transferiert wird.

7. Verfahren nach Anspruch 6, wobei im Edge-Computersystem (2) Ressourcen-Informationen des Edge-Computersystems (2) erfasst werden und im Cloud-Computersystem (3) Ressourcen-Informationen des Cloud-Computersystems (3) erfasst werden, und wobei die erfassten Ressourcen-Informationen hinsichtlich des Eintretens des vorgegebenen Ressourcenereignisses ausgewertet werden.

8. Verfahren nach Anspruch 7, wobei das Edge-Computersystem (2) und das Cloud-Computersystem (3) erfasste Ressourcen-Informationen über ein Nachrichten-basiertes Maschine-zu-Maschine-Protokoll austauschen.

9. Verfahren nach einem der Ansprüche 6 bis 8, wobei die Anwendungssoftware (6) als eine oder mehrere Container-Dateien bereitgestellt wird.
